# FASCICULE DE BREVET EUROPEEN

(11) **EP 2 429 356 B1**
(45) Date de publication et mention de la délivrance du brevet: **09.07.2014**
(21) Numéro de dépôt: 10722979.1
(22) Date de dépôt: 05.05.2010
(51) Int. Cl.: A47J 31/52, A47J 31/06

(54) **DISPOSITIF DE PORTE FILTRE**
FILTERHALTER
FILTER HOLDER

(30) Priorité: 15.05.2009 FR 0953230
(43) Date de publication de la demande: 21.03.2012
(73) Titulaire: Levi, Mario, 06200 Nice (FR); Levi, Jean-Pierre, 06200 Nice (FR)
(72) Inventeur: Levi, Mario, 06200 Nice (FR); Levi, Jean-Pierre, 06200 Nice (FR)
(74) Mandataire: Decobert, Jean-Pascal
(86) Numéro de dépôt international: PCT/EP2010/056101
(87) Numéro de publication internationale: WO 2010/130611

(56) Documents cités:
- US-A1- 2003 129 286

## Description

La présente invention concerne un dispositif de porte filtre pour la réception de mouture de café.

Elle concerne également un système pour la préparation de boisson à base de mouture de café, ce système étant avantageusement constitué par un moulin à café et par une machine de préparation de boisson à base de café.

Dans ce domaine, et particulièrement pour la préparation de cafés dit espressos, on utilise communément un ensemble de support d'une dose de mouture de café, constituant un dispositif de porte filtre. Le dispositif de porte filtre comporte une partie de préhension sous forme d'un manche et une partie de réception avec un filtre à mouture de café au sein d'une coupe porte filtre. La coupe porte filtre peut être réalisée à demeure dans l'ensemble du dispositif ou être amovible et généralement reçue dans un support par exemple à la forme globalement cylindrique creuse généralement appelé porte coupe.

En partie inférieure du dispositif, en aval du fond filtrant de la coupe, une sortie comportant une ou plusieurs voies est constituée pour l'évacuation de la boisson réalisée.

Ce type de dispositif de porte filtre coopère soit avec l'embouchure d'un moulin à café pour le chargement en mouture de café du dispositif soit avec une machine de préparation de boisson pour l'injection d'eau chaude au travers de la mouture et la réalisation de la boisson.

La coupe porte filtre du porte filtre est dédiée à une quantité pré déterminée de mouture de café. Généralement, on peut fabriquer simultanément une, deux ou plus de boissons au café. L'utilisateur, notamment un cafetier, choisit le dispositif de porte filtre comportant la coupe adaptée au nombre de boissons qu'il souhaite réaliser. Traditionnellement, il doit adapter manuellement la machine, qu'il s'agisse d'un moulin à café ou d'une machine de préparation de boisson, à la dose en question, en fonction du dispositif de porte filtre utilisé qui présente le volume de coupe à fond filtrant requis. Ces actions manuelles augmentent le temps de réalisation de la boisson et posent des problèmes de fiabilité puisque les risques d'erreur d'opérateur ne sont pas exclus.

Le demandeur a déjà cherché à solutionner ce problème en proposant un système de détection présenté dans la publication EP-A1-280 594 qui concerne un système de détection de doses pour dispositif de porte filtre comportant une coupe. La technique mise en oeuvre suivant cette antériorité consiste à utiliser des capteurs magnétiques à effet hall permettant, suivant un codage pré déterminé et suivant un mouvement de placement en rotation du dispositif de porte filtre, d'identifier quelques types différents de dispositifs de porte filtre.

Bien que donnant globalement satisfaction, le dispositif en question présente certaines limitations. En premier lieu, le nombre de types de dispositifs de porte filtre détectables est limité par la construction même du capteur. Ce dispositif ne peut donc pas être étendu à des détections en plus grand nombre notamment lié outre au volume de la mouture de café ou à des paramètres de préparation de boisson qui peuvent varier suivant la qualité de type de café.

En outre, ce dispositif permet une lecture fiable lorsque le mouvement de passage du dispositif de porte filtre devant les capteurs magnétiques est opéré correctement. Un mouvement particulier est donc nécessaire et le type de détection réalisé impose de fortes contraintes sur la conception du système de lecture qui doit être positionné à proximité immédiate du dispositif porte filtre à détecter ce qui génère des contraintes de conception, un encombrement et un coût induit non négligeable.

La présente invention permet de remédier en tout ou partie aux inconvénients des techniques actuelles et propose à cet effet un dispositif de porte filtre pour mouture de café selon la revendication 1.

En utilisant une radio étiquette (technologie du type RFID pour radio frequency identification) l'invention pallie des contraintes liés à la proximité nécessaire entre l'identifiant et les moyens de lecture. Elle permet également par un système sans contact de protéger les moyens d'identification par l'intermédiaire d'une coque de protection. Ce système est présenté dans la publication US 2003/0129286 A1.

Le nombre de types d'identifiant est par ailleurs nettement plus étendu et un même dispositif de porte filtre peut être aisément adapté à un nouvel identifiant lorsque la radio étiquette est amovible.

Alors que les environnements métalliques sont généralement considérées comme des obstacles au bon fonctionnement des systèmes d'identification radio fréquence, le demandeur a constaté avec surprise que son invention donnait entière satisfaction lorsque l'étiquette est enveloppée dans une coque de protection et que l'on définit une distance de détection limitée.

Avantageusement, l'identification par radio étiquette est combinée avec des moyens de détection de présence au niveau de l'embouchure du moulin à café ou de l'embouchure de la machine de préparation de boisson de sorte à combiner ces données pour la commande de fonctionnement du système.

D'autres buts et avantages apparaîtront au cours de la description qui suit qui présente un mode de réalisation préféré de l'invention.

L'invention concerne par ailleurs un système pour la préparation de boisson à base de mouture de café comportant un organe de réception amovible d'un dispositif, un lecteur de radio étiquette et des moyens de traitement aptes à générer un signal de commande de fonctionnement en fonction des données d'identification.

Ce système peut se présenter suivant les variantes suivantes non limitatives :
- le lecteur est placé de sorte à être situé à une distance inférieure à 15 centimètres de la radio étiquette lorsque le dispositif de porte filtre est reçu par l'organe de réception.
- il comporte des moyens de détection de présence d'un dispositif de porte filtre au niveau de l'organe de réception.
- il comporte des moyens de commande configurés pour générer le signal de commande de fonctionnement sur condition cumulée d'une détection de présence et d'une lecture de radio étiquette.
- le lecteur de radio étiquette est configuré pour n'être activé que sur condition d'une détection de présence

Les dessins ci-joints sont donnés à titre d'exemples et ne sont pas limitatifs de l'invention. Ils représentent seulement un mode de réalisation de l'invention et permettront de la comprendre aisément.
La figure 1 illustre en perspective une possibilité de réalisation de dispositif de porte filtre.
La figure 2 montre une vue en perspective d'un système équipé d'un dispositif de porte filtre.

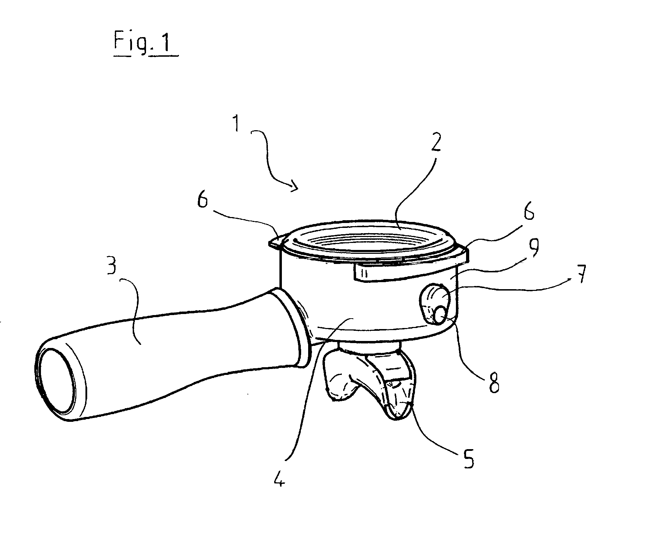

En référence à la figure 1, il est rappelé que le dispositif de porte filtre 1 comporte de façon conventionnelle une poignée 3 ainsi qu'une coupe 2 présentant un fond filtrant et apte à recevoir dans son volume intérieur une dose pré déterminée de mouture de café. Le dispositif 1 comporte en outre un support 4 délimitant par une paroi 9 une cavité interne dans laquelle est logée la coupe 2 et sur le pourtour supérieur duquel la coupe 2 s'applique.

Deux baïonnettes de montage 6 font avantageusement saillies au delà de la paroi 9 pour construire des éléments de coopération avec l'embouchure porte coupe d'une machine telle une machine de préparation de boissons ou un moulin à café.

En partie inférieure, en sortie de liquide, le dispositif 1 est pourvu d'une sortie de boisson 5 pouvant comporter une ou plusieurs voies.

La radio étiquette selon l'invention est positionnée sur la paroi 9 à l'extérieur du support 4 à l'intérieur d'une coque 7 avantageusement en matière plastique. La coque 7 présente par ailleurs préférentiellement un trou de réception d'une vis 8 pour le montage amovible de la radio étiquette sur le dispositif 1. De cette façon, on peut aisément remplacer la radio étiquette en cas de dysfonctionnement ou lorsque l'on souhaite changer l'identifiant du dispositif de porte filtre 1.

En utilisant une étiquette passive (sans batterie intégrée) on obtient un système ne nécessitant aucune maintenance. L'identification numérique réalisée par la radio étiquette peut utiliser un standard de communication et de formatage du type OPC - 96.

Le dispositif de radio étiquette 1 ainsi décrit peut coopérer avec un moulin à café 10 et/ou une machine de préparation de boisson pour constituer un système d'identification radio.

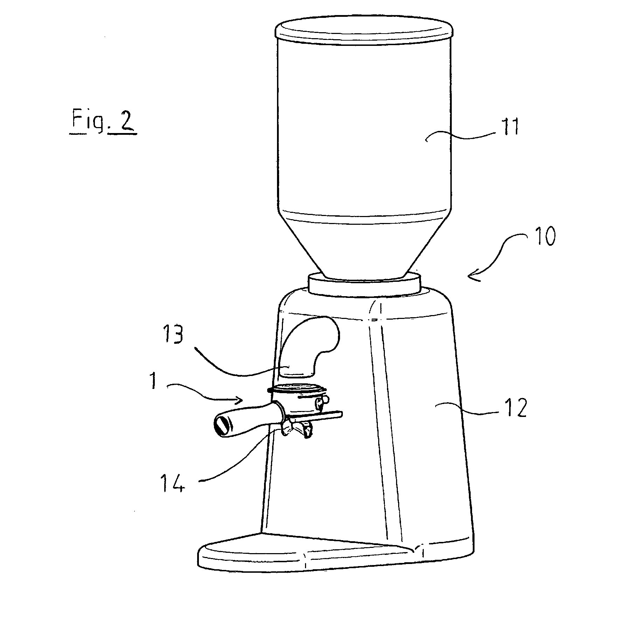

Dans le cas présenté en figure 2, un moulin 10 comportant de façon classique une base 12 et une trémie 11 de réception et de stockage de café en grains permet de produire une mouture de café délivré au niveau de l'embouchure 13 à la coupe 2 d'un dispositif de porte filtre 1 positionné à cet endroit.

Deux moyens de positionnement du dispositif de porte filtre 1 sont avantageusement présents au niveau de l'embouchure tel deux organes de réception 14 ici figurés sous forme de deux tiges parallèles s'appliquant sur une portion inférieure du support 4.

Le système comporte un lecteur de radio étiquette apte à émettre des signaux de radio fréquence permettant d'activer la radio étiquette placée à proximité de sorte à produire la transmission d'identifiant souhaité. On peut utiliser des technologies de lecteur conventionnelles notamment en terme de fréquence de communication.

Avantageusement, on utilise un lecteur de portée limitée de sorte à éviter les collisions de détection de plusieurs radio étiquettes. Le demandeur a constaté qu'une portée inférieure à 15 centimètres donnait satisfaction. Le lecteur est placé en conséquence dans le système de sorte que la distance séparant la zone de coopération du dispositif de porte filtre 1 avec l'embouchure 13 et le lecteur soit inférieure à la portée de ce dernier.

Préférentiellement, on combine la lecture d'identifiant avec une détection de présence au niveau de l'embouchure de la machine. Des moyens de détection de présence du type capacitifs ou inductifs peuvent être employés. Une détection optique est également réalisable.

Suivant une possibilité, le lecteur de radio étiquette n'est activé que lorsque les moyens de détection de présence détectent la présence d'un dispositif de porte filtre au niveau de l'embouchure de la machine.

Par ailleurs, le fonctionnement de la machine (en particulier la mise en route du moulin ou le déclenchement de la machine de préparation de boisson par infusion et notamment la pompe) ne se produit que sur condition cumulative de lecture d'un identifiant reconnu et d'une détection de présence.

Cette double sécurité assure l'opérateur d'un bon déroulement des opérations.

Au niveau du lecteur, une table de données permet avantageusement de faire correspondre l'identifiant des radio étiquettes avec un attribut. Suivant une solution avantageuse, l'attribut constitue une quantité de mouture de café. Cependant, d'autres attributs sont utilisables notamment quant à une qualité particulière de café, une granularité de mouture ou autre. L'identifiant peut également être utilisé pour fournir un attribut de type de dispositif de porte filtre de sorte à éviter la coopération dans un même système entre une machine à café ou un moulin d'une part et un dispositif de porte filtre d'autre part non susceptibles d'une bonne coopération. Cette fonctionnalité permet d'éviter que l'opérateur utilise des dispositif de porte filtre non adaptés à la machine et risque d'endommager le système.

### REFERENCES

1. Dispositif de porte filtre
2. Coupe
3. Poignée
4. Support
5. Sortie de boisson
6. Baïonnette de montage
7. Coque
8. Vis
9. Paroi
10. Moulin
11. Trémie
12. Base
13. Embouchure
14. Organe de réception

## Revendications

1. Dispositif de porte filtre (1) pour mouture de café, comportant une poignée (3), une coupe porte filtre (2) et des moyens d'identification comportant une radio étiquette **caractérisé par le fait que** la coupe (2) est logée dans un support (4) raccordé à la poignée (3), la radio étiquette étant rapportée sur la paroi extérieure (9) du support (4) et dans lequel la radio étiquette est recouverte d'une coque protectrice (7) fixée de façon amovible sur le support (4).

2. Dispositif selon la revendication 1 dans lequel la coque (7) recouvre entièrement la radio étiquette.

3. Système pour la préparation de boisson à base de mouture de café comportant un organe de réception (14) amovible d'un dispositif selon l'une des revendications précédentes, un lecteur de radio étiquette et des moyens de traitement aptes à générer un signal de commande de fonctionnement en fonction des données d'identification.

4. Système selon la revendication 3 dans lequel le lecteur est placé de sorte à être situé à une distance inférieure à 15 centimètres de la radio étiquette lorsque le dispositif de porte filtre (1) est reçu par l'organe de réception (14).

5. Système selon la revendication 3 ou 4 comportant des moyens de détection de présence d'un dispositif de porte filtre (1) au niveau de l'organe de réception (14).

6. Système selon la revendication 5 comportant des moyens de commande configurés pour générer le signal de commande de fonctionnement sur condition cumulée d'une détection de présence et d'une lecture de radio étiquette.

7. Système selon la revendication 5 ou 6 dans lequel le lecteur de radio étiquette est configuré pour n'être activé que sur condition d'une détection de présence.

8. Système selon une des revendications 3 à 7 comportant une machine de préparation de boisson pour infusion de mouture de café.

9. Système selon une des revendications 3 à 8 comportant un moulin à café.

## Patentansprüche

1. Filterhaltervorrichtung (1) für gemahlenen Kaffee, bestehend aus einem Griff (3), einer Filterhalter-Schale (2) und Identifizierungsmitteln, bestehend aus einem Tag, dadurch gegenzeichnet dass, die Schale (2) in der Auflage (4), die mit dem Griff (3) verbunden ist, platziert wird, so dass der Tag an die Außenwand (9) der Auflage (4) gedrückt wird, wodurch der Tag durch eine Schutzhülle (7), die fest mit der Auflage (4) verbunden ist, abgedeckt wird.

2. Vorrichtung gemäß Anspruch 1, wobei die Hülle (7) den Tag komplett umschließt.

3. System für die Zubereitung des Getränks mit gemahlenem Kaffee, bestehend aus einer festen Aufnahmevorrichtung (14) eines Instruments, das in einem der vorhergehenden Ansprüche beschrieben wurde, einem Tag-Lesegerät und Verarbeitungsvorrichtungen, die ein Betriebs-Steuersignal abhängig von den Identifikationsdaten erstellen können.

4. System gemäß Anspruch 3, wobei das Lesegerät innerhalb eines Bereiches von 15 cm vom Tag anzubringen ist, wenn der Filterhalter (1) in die Aufnahmevorrichtung (14) eingesetzt worden ist.

5. System gemäß Anspruch 3 oder 4, bestehend aus der Filterhalter-Überwachung (1) in Höhe der Aufnahmevorrichtung (14).

6. System gemäß Anspruch 5, bestehend aus den Steuereinrichtungen, die konfiguriert wurden, um das Betriebs-Steuersignal kumuliert für Präsenzfunktion und Tag-Erkennung zu erstellen.

7. System gemäß Anspruch 5 oder 6, wobei das Tag-Lesegerät so konfiguriert wird, dass es nur durch die Präsenzfunktion aktiviert wird.

8. System gemäß Anspruch 3 bis 7, bestehend aus einem Getränkezubereitungsgerät zum Aufbrühen von gemahlenem Kaffee.

9. System gemäß Anspruch 3 bis 8, bestehend aus einer Kaffeemühle.

## Claims

1. A filter holder device (1) for ground coffee, comprising a handle (3), a filter holder cup (2) and identification means comprising a radio tag, **characterized in that** the cup (2) is accommodated in a support (4) connected to the handle (3), with the radio tag being attached to the outer wall (9) of the support (4) and wherein the radio tag is covered with a protective shell (7) removably fixed to the support (4).

2. Device according to claim 1, wherein the shell (7) totally covers the radio tag.

3. System for producing a ground coffee-based beverage having a removable receiving member (14) of a device according to one of the preceding claims, a radio tag reader and processing means adapted to generate an operation control signal according to the identification data.

4. System according to claim 3, wherein the reader is so positioned as to be located at a distance of less than 15 centimeters from the radio tag when the filter holder (1) is received by the receiving member (14).

5. System according to claim 3 or 4, comprising means for detecting the presence of a filter holder (1) at the receiving member (14).

6. System according to claim 5, comprising control means so configured as to generate the operation control signal provided both conditions of the detection of presence and reading of a radio tag are met.

7. System according to claim 5 or 6, wherein the radio tag reader is so configured as to be actuated provided the condition of detection of a presence is met only.

8. System according to one of claims 3 to 7, comprising a beverage production machine for brewing ground coffee.

9. System according to one of Claims 3 to 8, comprising a coffee grinder.
